# EUROPÄISCHE PATENTSCHRIFT

(11) **EP 3 854 629 B1**
(45) Veröffentlichungstag und Bekanntmachung des Hinweises auf die Patenterteilung: **12.03.2025**
(21) Anmeldenummer: 20153013.6
(22) Anmeldetag: 22.01.2020
(51) Int. Cl.: B60L 53/30, B60L 53/31, G08B 13/196, G08B 29/18, G08B 29/14, G08B 25/00

(54) **SYSTEM UND VERFAHREN ZUR DIEBSTAHL- UND VANDALISMUSERKENNUNG UND -WARNUNG FÜR LADESÄULEN FÜR FAHRZEUGE**
SYSTEM AND METHOD FOR THEFT AND VANDALISM DETECTION AND WARNING FOR CHARGING COLUMNS FOR VEHICLES
SYSTÈME ET PROCÉDÉ DE DÉTECTION ET D'AVERTISSEMENT DE VOL ET DE VANDALISME POUR COLONNES DE CHARGE POUR VÉHICULES

(43) Veröffentlichungstag der Anmeldung: 28.07.2021
(73) Patentinhaber: Volkswagen Aktiengesellschaft, 38440 Wolfsburg (DE)
(72) Erfinder: Meitzner, Matthias, 38176 Wendeburg (DE); Rendel, Holger, 38112 Braunschweig (DE); Hirsch, Michael, 31226 Peine (DE)

(56) Entgegenhaltungen:
- CN-A- 107 038 828
- CN-U- 206 863 882
- DE-A1- 102013 206 687
- DE-A1- 102017 215 882
- US-A1- 2018 357 871

## Beschreibung

Die Erfindung betrifft eine Ladesäule zum Laden von Fahrzeugen und aufweisend ein System zur Diebstahl- und Vandalismuserkennung und zur Warnung bei Diebstahl- und Vandalismuserkennung. Die Erfindung betrifft ferner ein Verfahren einer solchen Ladesäule zur Diebstahl- und Vandalismuserkennung und zur Warnung bei Diebstahl- und Vandalismuserkennung sowie ein Computerprogrammprodukt.

Fahrzeuge, die teilweise oder vollständig elektrisch betrieben werden, benötigen eine entsprechende Ladeinfrastruktur. Ein wesentlicher Teil dieser Ladeinfrastruktur wird durch sogenannte Ladesäulen realisiert, an welchen Ladevorgänge der Fahrzeuge vollzogen werden können. Im Zuge von neuen Konzepten werden insbesondere Ladesäulen favorisiert, welche einen besonders schnellen Ladevorgang ermöglichen. Diese Schnellladesäulen steigern aufgrund einer geringeren Ladezeit zusätzlich die Attraktivität der Elektromobilität. Allerdings enthalten insbesondere die neueren Ladesäulen hierfür zunehmend sehr teure technische Komponenten. Diese Ladesäulen werden häufig Diebstahlversuchen und Vandalismus aber auch Umwelteinflüssen ausgesetzt, wodurch sowohl ein vollständiger Verlust, eine sichtbare äußere Beschädigung als auch eine Funktionseinschränkung eintreten können. Ein einfacher Transfer von gängigen Alarmanlagen, welche beispielsweise in Fahrzeugen oder auch in Immobilien eingesetzt werden, greift dabei aufgrund von Sicherheitsaspekten zu kurz. Nachfolgend werden einige bisherige Lösungsansätze aus dem Stand der Technik vorgestellt, welche sich im weitesten Sinne mit den zuvor erläuterten Herausforderungen beschäftigen.

So ist aus der Druckschrift DE 10 2010 009 657 A1 eine Vorrichtung und ein Verfahren zur Überwachung eines Ladekabels für ein Fahrzeug als bekannt zu entnehmen. Insbesondere wird eine Vorrichtung zur Überwachung eines Ladekabels für ein Fahrzeug mit einer Einrichtung zum Erfassen der Fahrzeugumgebung zumindest im Bereich des Ladekabels vorgestellt, wobei das Anschließen des Ladekabels an das Fahrzeug das Erfassen der Fahrzeugumgebung aktiviert.

Aus der Druckschrift DE 10 2013 206 687 A1 ist zudem ein Bereitstellen eines Warnsignales für eine Ladesäule als bekannt zu entnehmen. Insbesondere wird ein Verfahren zum Bereitstellen eines Warnsignales für eine Ladesäule zur Warnung vor einer Beschädigung der Ladesäule vorgestellt. Zudem wird eine Ladesäule hierfür vorgestellt. Dabei wird mit Hilfe von Referenzsensordaten und einer Beschädigungsklasse ein Klassifizierungsergebnis ermittelt und in Abhängigkeit davon ein Warnsignal ausgegeben.

Aus der Druckschrift DE 10 2017 215 882 A1 ist zudem eine Vorrichtung zur Ladung eines elektrochemischen Traktionsenergiespeichers eines Fortbewegungsmittels als bekannt zu entnehmen. Dabei wird eine Vorrichtung zur Ladung eines elektrochemischen Traktionsenergiespeichers eines Fortbewegungsmittels vorgeschlagen, wobei die Vorrichtung folgende Komponenten umfasst: einen elektrochemischen Energiespeicher zur Ladung des Traktionsenergiespeichers des Fortbewegungsmittels, einen Ladestecker zum Herstellen einer elektrischen Verbindung zum Traktionsenergiespeicher des Fortbewegungsmittels, eine Auswerteeinheit, eine Sendeeinrichtung und ein Ortungsmodul, wobei das Ortungsmodul eingerichtet ist, eine Position der Vorrichtung festzustellen und mittels der Sendeeinrichtung an eine zentrale Verwaltungseinrichtung zu senden.

DE 10 2013 206 687 A1 offenbart ein Verfahren zum Bereitstellen eines Warnsignals für eine Ladesäule zur Warnung vor einer Beschädigung der Ladesäule. Es ist vorgesehen, dass ein Sensorelement, beispielsweise ein Lagesensor oder ein Bewegungssensor, aktiviert wird. Entsprechend des dann anliegenden Signales wird ein Warnsignal ausgelöst.

CN 206 863 882 U offenbart eine Diebstahlsicherung für eine Ladesäule. Die Ladesäule weist hierzu einen Vibrationssensor auf. Bei Aktivierung des Vibrationssensors wird eine Verbindung zu einem entfernt angeordneten Überwachungsterminal hergestellt.

US 2018 / 357 871 A1 offenbart eine Audio-/Videosprechstelle für Gebäude. Über einen Bewegungssensor wird hierbei eine Kamera eingeschaltet, um über einen entfernten Monitor zu erkennen, wer sich im Bereich der Sprechstelle aufhält.

Der Erfindung liegt nun die Aufgabe zugrunde, eine Ladesäule zum Laden für Fahrzeuge mit einem alternativen System zur Diebstahl- und Vandalismuserkennung und zur Warnung bei Diebstahl- und Vandalismuserkennung bereitzustellen, welche eine bedarfsgerechte und betriebssichere Funktionsweise gewährleisten.

In bevorzugter Ausgestaltung der Erfindung ist vorgesehen, dass eine Ladesäule zum Laden von Fahrzeugen mit einem System zur Diebstahl- und Vandalismuserkennung und -warnung gemäß Anspruch 1 bereitgestellt wird. Solch ein System umfasst dabei eine Steuer- und Recheneinheit mit Auswerteprogramm sowie eine Mehrzahl von sich unterscheidenden Sensorelementen, welche ausgelegt sind, Zustände der Ladesäule zu detektieren. Es ist dabei wenigstens eine Einheit eines jeden sich unterscheidenden Sensorelements vorgesehen. Die jeweiligen Sensorelemente sind dabei jeweils mit der Steuer- und Recheneinheit mit Auswerteprogramm gekoppelt, sodass jeweilige Zustände der Sensorelemente detektierbar und/oder steuerbar sind. Zudem umfasst solch ein System wenigstens ein Aktorelement zur Ausgabe eines Warnsignals. Im aktivierten Zustand des Systems sind wenigstens ein Neigungssensor und wenigstens ein Bewegungssensor aktiviert, wobei eine jeweilige mittels der Steuer- und Recheneinheit mit Auswerteprogramm detektierte Zustandsänderung des wenigstens einen Neigungssensors und/oder des wenigstens einen Bewegungssensors eine Aktivierung von wenigstens einem weiteren Sensorelement bedingt, sodass eine Auswertung aller aktivierten Sensorelemente mittels der Steuer- und Recheneinheit mit Auswerteprogramm durchführbar ist und in Abhängigkeit eines Auswerteergebnisses eine dafür vorgesehene in dem Auswerteprogramm jeweils hinterlegte Aktionsroutine auslösbar ist. Auf diese Weise kann ein alternatives System zur Diebstahl- und Vandalismuserkennung und -warnung für Ladesäulen für Fahrzeuge bereitgestellt werden, welches eine bedarfsgerechte und betriebssichere Funktionsweise gewährleistet. Das vorgestellte System ist dabei geeignet, in jeglicher Weise an einer entsprechenden Ladesäule angeordnet oder zumindest teilweise integriert zu werden.

Die Betriebsweise ist dabei gestaffelt vorgesehen, wobei beispielsweise vier Stufen vorgesehen sind. In einer ersten Stufe spielen dabei der wenigstens eine Neigungssensor und/oder der wenigstens eine Bewegungssensor einen zentrale Rolle. Diese Sensoren sind dabei im Sinne einer Umfelderkennung vorgesehen und erst in Abhängigkeit einer jeweiligen Zustandsänderung dieser Sensoren werden weitere Elemente aktiviert, wobei dann beispielsweise mechanische Einwirkungen an der Ladesäule überprüft werden und eine detailliertere Umfelderfassung durchführbar ist. Die weiteren Schritte sind dann in der jeweils ausgelösten Aktionsroutine zumindest teilweise integriert. Die Aktionsroutine ist beispielsweise ausgelegt, zumindest dem Diebstahl- und/oder Vandalismusversuchen entgegen zu wirken beziehungsweise Aktionen bereitzustellen, welche geeignet sind, proaktiv den äußeren Einflüssen entgegenzuwirken oder diese zumindest in geeigneter Weise zu dokumentieren und/oder zu vermessen. Diese Unterteilung ermöglicht einen stromsparenden Betrieb und eine bedarfsgerechte Aktivierung von mittels der jeweiligen Sensorelemente vorgesehenen Überwachungsfunktionen des vorgestellten Systems. Somit kann das System auch länderspezifischen Datenschutzanforderungen genügen, da keine permanente Überwachung stattfindet, sondern nur eine bedarfsgerechte, anlassbezogene intensivere Überwachung vorgesehen ist. Dies führt auch zu einer Erhöhung der Lebensdauer einzelner Komponenten, da somit ein Dauerbetrieb vermieden wird.

Mit anderen Worten ist in der ersten Stufe das aktivierte System in einer Art normalen Betrieb, indem lediglich der wenigstens eine Neigungssensor und/oder der wenigstens eine Bewegungssensor aktiviert sind, sodass beispielsweise zuverlässig erkannt wird, inwiefern sich eine Person oder ein Gegenstand nähert. Gleichzeitig ist es möglich, eine Überwachung einer Lage der Ladesäule zu gewährleisten. Somit findet eine Überwachung der Lage des Systems auf einem Untergrund statt, auf welchem die Ladesäule platziert ist. Bei der Erkennung von Bewegungen im Umfeld oder von Bewegungen des Systems beziehungsweise der Ladesäule selbst wird entsprechend die zweite Stufe mit einer Aktivierung der weiteren Sensorelemente initiiert. Das System ist somit vorteilhaft ausgelegt, in eine Ladesäule integriert zu werden, wobei somit eine Integration einer mehrstufig agierenden Sensorik in die Ladesäule zur Erkennung von einem unsachgemäßen Umgang (Diebstahl, Vandalismus) aber auch von Umwelteinflüssen gewährleistbar ist.

Erfindungsgemäß ist ferner vorgesehen, dass ein Verfahren zur Diebstahl- und Vandalismuserkennung und -warnung für Ladesäulen für Fahrzeuge gemäß Anspruch 12 bereitgestellt wird. Solch ein Verfahren umfasst dabei unter anderem die folgenden Schritte: Bereitstellen einer Steuer- und Recheneinheit mit Auswerteprogramm, Bereitstellen einer Mehrzahl von sich unterscheidenden Sensorelementen, welche ausgelegt sind, Zustände der Ladesäule zu detektieren, wobei wenigstens eine Einheit eines jeden sich unterscheidenden Sensorelements vorgesehen wird und jeweilige Sensorelemente jeweils mit der Steuer- und Recheneinheit mit Auswerteprogramm gekoppelt werden, sodass jeweilige Zustände der Sensorelemente detektierbar und/oder steuerbar sind, Bereitstellen wenigstens eines Aktorelements zur Ausgabe eines Warnsignals.

Das Verfahren umfasst zudem unter anderem den folgenden weiteren Schritt: Aktivieren wenigstens eines Neigungssensor und wenigstens eines Bewegungssensor, wobei eine jeweilige mittels der Steuer- und Recheneinheit mit Auswerteprogramm detektierte Zustandsänderung des wenigstens einen Neigungssensors und/oder des wenigstens einen Bewegungssensors eine Aktivierung von wenigstens einem weiteren Sensorelement bedingt, sodass eine Auswertung aller aktivierten Sensorelemente mittels der Steuer- und Recheneinheit mit Auswerteprogramm durchführbar ist und in Abhängigkeit eines Auswerteergebnisses eine dafür vorgesehene in dem Auswerteprogramm jeweils hinterlegte Aktionsroutine auslösbar ist.

Die zuvor genannten Vorteile gelten soweit übertragbar auch für das vorgestellte Verfahren.

Erfindungsgemäß ist ferner vorgesehen, dass ein Computerprogrammprodukt zur Durchführung eines Verfahrens nach Anspruch 13 bereitgestellt wird. Die zuvor genannten Vorteile gelten soweit übertragbar auch für das vorgestellte Computerprogrammprodukt.

Vorzugsweise ist solch eine Ladesäule mit zumindest einem fest eingebauten Akkumulator ausgestattet, um höhere Ladeleistungen anbieten und unabhängig von einer entsprechenden Infrastruktur betrieben werden zu können. Dies erhöht zusätzlich den Wert solch einer Ladestation. Durch die elektrische Unabhängigkeit von der Infrastruktur besteht nicht mehr die Notwendigkeit, die Ladesäulen fest zu montieren. Die zuvor genannten Vorteile gelten soweit übertragbar auch für die vorgestellte Ladesäule.

Weitere bevorzugte Ausgestaltungen der Erfindung ergeben sich aus den übrigen, in den Unteransprüchen genannten Merkmalen.

Erfindungsgemäß vorgesehen, dass das wenigstens eine weitere Sensorelement ausgewählt ist aus: Beschleunigungssensor, Schocksensor, Helligkeitssensor, und bevorzugt ferner aus Kameravorrichtung und Mikrofonvorrichtung.

Die zuvor genannten Vorteile sind somit noch besser umzusetzen.

Erfindungsgemäß ist ferner vorgesehen, dass die Aktionsroutine eine Aktivierung des wenigstens einen Aktorelements und eine Ausschaltung einer Leistungselektronik der Ladesäule umfasst. Es ist in diesem Zusammenhang somit möglich, eine jeweilige Aktionsroutine auszulösen, welche das wenigstens eine vorgesehene Aktorelement aktiviert. Beispielsweise kann somit eine Integration einer mehrstufigen Aktorik vorgesehen sein, welche ausgelegt ist, eine aktive Anzeige und Wiedergabe von Warnmeldungen bei einem unsachgemäßen Umgang (Diebstahl, Vandalismus) der Ladesäule durchzuführen. Auf diese Weise ist es auch möglich, eine bedarfsgerechte automatische Abschaltung der Leistungselektronik zum Schutz von Personen bereitzustellen. Auch kann somit die Ladesäule unbrauchbar gemacht werden, sodass sich ein Diebstahl nicht mehr als lohnend darstellt. Insbesondere kann dieses Abschalten und ein unbrauchbarer Modus bezogen auf einen nicht zugangsberechtigten Personenkreis beschränkt sein.

Ferner ist in einer weiteren Ausgestaltung der Erfindung vorgesehen, dass das wenigstens eine Aktorelement ausgewählt ist aus: Lautsprecher, Bildschirmeinheit, Außenbeleuchtungselement, Neigungsausgleichsvorrichtung, insbesondere Neigungsausgleichsvorrichtung mit wenigstens einem Stellmotor, Warnleuchtelement. Die zuvor genannten Vorteile sind somit noch besser umzusetzen.

Zudem ist in einer weiteren Ausgestaltung der Erfindung vorgesehen, dass nach der Ausschaltung einer Leistungselektronik der Ladesäule benutzerdefiniert eine Funktionsprüfung des Systems auslösbar ist. Diese Funktionsprüfung ist dabei insbesondere als eine Art Selbsttest vorgesehen. Wenn ein Benutzer diese Prüfung auslöst, ist das System somit in der Lage folgende Schritte und Handlungen in einem automatischen Modus durchzuführen. Durch die integrierte intelligente Funktionsprüfung kann die funktionale Sicherheit der Ladesäule vor Ort bei höchstmöglicher Verfügbarkeit gewährleistet werden.

Auch ist in einer weiteren Ausgestaltung der Erfindung vorgesehen, dass die Funktionsprüfung eine jeweilige Testroutine für die unterschiedlichen sich unterscheidenden Sensorelemente umfasst. Auf diese Weise kann überprüft werden, inwiefern ausgelöste Aktionen in dem System eventuell mit einem beschädigten oder nicht einwandfreien Sensorelement zusammenhängen oder nicht. Diese Testroutine gewährleistet somit ein besonders zuverlässiges System.

Ferner ist in einer weiteren Ausgestaltung der Erfindung vorgesehen, dass die Funktionsprüfung eine jeweilige Testroutine für das wenigstens eine Aktorelement umfasst. Auf diese Weise kann überprüft werden, inwiefern ausgelöste Aktionen in dem System eventuell mit einem beschädigten oder nicht einwandfreien Aktorelement zusammenhängen oder nicht. Diese Testroutine gewährleistet somit ein besonders zuverlässiges System.

Zudem ist in einer weiteren Ausgestaltung der Erfindung vorgesehen, dass jeweilige Testergebnisse der einzelnen Testroutinen zusammen mittels der Steuer- und Recheneinheit mit Auswerteprogramm auswertbar sind, sodass Mehrfachfehler detektierbar sind. Gegenseitig sich bedingende Fehlerquellen sind somit einwandfrei identifizierbar, sodass schnell geeignete Handlungsmöglichkeiten einleitbar sind.

Ferner ist in einer weiteren Ausgestaltung der Erfindung vorgesehen, dass die jeweiligen Testroutinen für die unterschiedlichen sich unterscheidenden Sensorelemente ausgelegt sind, jeweilige gemessene aktuelle Werte der jeweiligen unterschiedlichen sich unterscheidenden Sensorelemente mit jeweiligen in der Steuer- und Recheneinheit mit Auswerteprogramm hinterlegten Erwartungswerten abzugleichen, sodass eine Ausmaß eines Fehlers feststellbar ist und sodass in Abhängigkeit dieses Ausmaß wenigstens eine weitere in dem Auswerteprogramm jeweils hinterlegte Aktionsroutine auslösbar ist. Somit ist eine besonders zuverlässige Betriebsweise des Systems gewährleistbar, da die Funktionsweise der einzelnen sich unterscheidenden Sensorelemente im laufenden Betrieb überprüfbar sind, sodass ein eventueller Fehlalarm bemerkbar ist.

Zudem ist in einer weiteren Ausgestaltung der Erfindung vorgesehen, dass eine weitere Aktionsroutine eine Aktivierung einer Positionsortungsvorrichtung umfasst. Falls somit die Ladesäule und damit das integriert vorgesehene System örtlich von einem Bestimmungsort wegbewegt wird, kann diese Bewegung nicht nur registriert werden, sondern es kann zudem eine neue Position schnell und zuverlässig mittels der Positionsortungsvorrichtung bestimmt werden. Somit kann eine gestohlene Ladesäule leicht aufgefunden werden und entsprechend sichergestellt werden. Eine derartige Positionsortungsvorrichtung kann beispielsweise einen geeigneten GPS-Empfänger umfassen, welcher zum Beispiel in einem Dach von dem System oder der Ladesäule integrierbar ist. Die Integration solch eines GPS-Empfängers dient dabei zur Ermittlung der aktuellen Position und einer Positionsveränderung, welche beispielsweise bei einem Diebstahlversuch besonders von Interesse ist.

Erfindungsgemäß ist ferner vorgesehen, dass eine weitere Aktionsroutine eine Aktivierung einer Kommunikationseinheit, insbesondere eine Kommunikationseinheit basierend auf Mobilfunk und/oder einer WiFi-Technologie, umfasst, sodass zumindest eine Information über den aktuellen Zustand der Ladesäule an einen Betreiber bereitstellbar ist. Somit kann ein Betreiber jederzeit entsprechend über Zustände informiert werden und gegebenenfalls geeignete Maßnahmen einleiten oder durchführen.

Schlussendlich ist in einer weiteren Ausgestaltung der Erfindung vorgesehen, dass vor einer jeweiligen Aktivierung des Systems eine benutzerdefiniert auslösbare Startroutine, welche eine jeweilige Testroutine für die unterschiedlichen sich unterscheidenden Sensorelemente und/oder eine Isolationsprüfung von der Leistungselektronik der Ladesäule und/oder eine Batterieprüfung umfasst, durchführbar ist. Diese Startroutine sichert somit einen zuverlässigen Betrieb derart ab, sodass Fehlalarme während eines laufenden Betriebs im Wesentlichen ausgeschlossen werden können.

Die vorgestellten Erfindungen lassen sich im Zusammenhang mit jeglichen Ladesäulen, mobilen Ladesäulen einsetzen und verwenden. Beispielsweise ist ein Einsatz mit flexiblen Schnellladesäulen, AC-DC Wallboxen vorstellbar. Auch ist ein Übertrag der vorgestellten Erfindungen auf weitere Anwendungsfelder vorstellbar. Beispielsweise kann ein Einsatz mit Fahrkartenautomaten, Verteilerkästen, Transformatorenstationen und Mobilfunkmasten vorgesehen sein.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung von einem System zur Diebstahl- und Vandalismuserkennung und -warnung für Ladesäulen für Fahrzeuge;
- Figur 2: ein Verfahrensablaufdiagramm von einem Verfahren zur Diebstahl- und Vandalismuserkennung und -warnung für Ladesäulen für Fahrzeugen;
- Figur 3: ein detaillierteres weiteres Verfahrensablaufdiagramm von einem Verfahren zur Diebstahl- und Vandalismuserkennung und -warnung für Ladesäulen für Fahrzeugen;
- Figur 4: eine schematische Darstellung von einer Ladesäule umfassend ein System nach den Ansprüchen 1 bis 12.

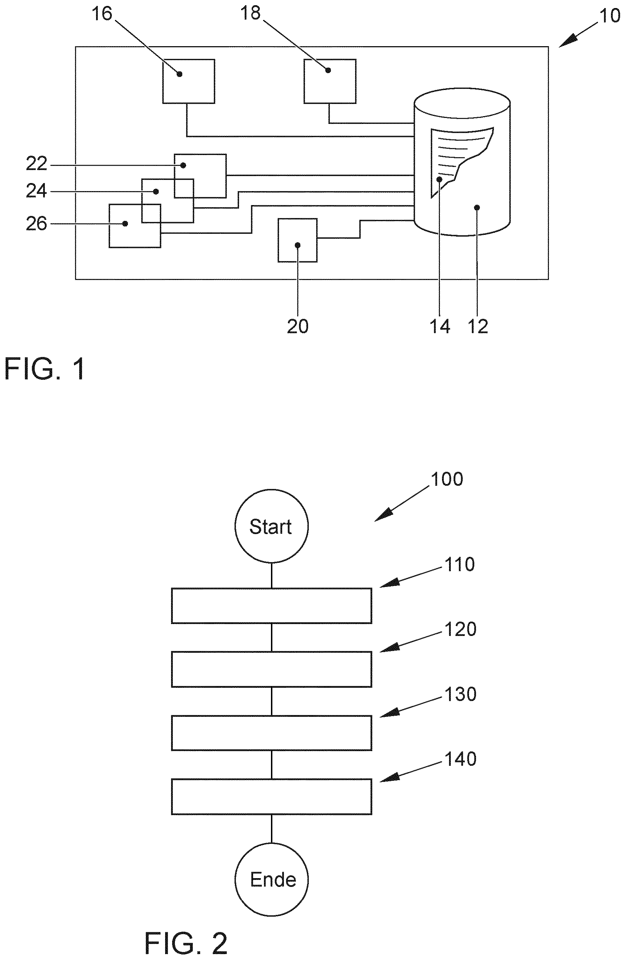

Figur 1 zeigt eine schematische Darstellung von einem System 10 zur Diebstahl- und Vandalismuserkennung und -warnung für Ladesäulen 28 für Fahrzeuge. Das System 10 ist dabei mit einer Steuer- und Recheneinheit 12 mit Auswerteprogramm 14 dargestellt. Das Auswerteprogramm 14 ist beispielsweise ausgelegt, ein Computerprogrammprodukt zur Durchführung eines Verfahrens nach Anspruch 12 zu umfassen.

Mit anderen Worten ist dieses Auswerteprogramm 14 auch dafür vorgesehen, steuernde Aktivitäten des Systems 10 und dessen jeweiliger Komponenten zu übernehmen und auszuführen. Zudem ist das System 10 mit einem Neigungssensor 16 und einem Bewegungssensor 18 dargestellt, welche jeweils mit der Steuer- und Recheneinheit 12 mit Auswerteprogramm 14 gekoppelt sind, sodass jeweilige Zustände dieser Sensorelemente 16, 18 detektierbar und/oder steuerbar sind. Zudem ist das System 10 mit einem Aktorelement 20 zur Ausgabe eines Warnsignals und weiteren Sensorelementen 22, 24, 26 dargestellt, wobei diese Elemente ebenfalls mit der Steuer- und Recheneinheit 12 mit Auswerteprogramm 14 gekoppelt sind. Die sich unterscheidenden Sensorelemente 16, 18, 22, 24, 26 sind dabei ausgelegt, Zustände einer nicht näher dargestellten Ladesäule 28 zu detektieren. Dabei sind die sich unterscheidenden Sensorelemente 16, 18, 22, 24, 26 jeweils so ausgelegt, dass jeweils ein anderer Zustand detektierbar ist. Der Neigungssensor 16 ist demnach ausgelegt, Bewegungszustände des Systems 10 beziehungsweise einer nicht näher dargestellten Ladesäule 28 zu detektieren. Diese Bewegungszustände können beispielsweise auf Höhen, Tiefen und Neigungen bezogen sein. Zum Beispiel können somit Änderungen des Untergrunds, insbesondere ein Kippen und/oder ein Absacken, aber auch ein Transportversuch detektiert werden. Der Bewegungssensor 18 hingegen detektiert, inwiefern sich wenigstens eine Person oder wenigstens ein Gegenstand dem System 10 beziehungsweise einer Ladesäule 28, in welche das System 10 integriert ist, nähert. Dieser Bewegungssensor 18 kann beispielsweise außen am System 10 angeordnet sein. In einem aktivierten Zustand des Systems 10 sind der Neigungssensor 16 und der Bewegungssensor 18 aktiviert, wobei jeweilige mittels der Steuer- und Recheneinheit 12 mit Auswerteprogramm 14 detektierte Zustandsänderung des Neigungssensors 16 und/oder des Bewegungssensors 18 eine Aktivierung von wenigstens einem weiteren Sensorelement 22, 24, 26 bedingt, sodass eine Auswertung aller aktivierten Sensorelemente 16, 18, 22, 24, 26 mittels der Steuer- und Recheneinheit 12 mit Auswerteprogramm 14 durchführbar ist und in Abhängigkeit eines Auswerteergebnisses eine dafür vorgesehene in dem Auswerteprogramm 14 jeweils hinterlegte Aktionsroutine auslösbar ist. Das erste weitere Sensorelement 22 kann beispielsweise ein Beschleunigungssensor sein oder umfassen. Das zweite weitere Sensorelement 24 kann beispielsweise ein Helligkeitssensor sein oder umfassen. Das dritte weitere Sensorelement 26 kann beispielsweise ein Schocksensor sein oder umfassen. Der Schocksensor kann beispielsweise an einer Außenwand von dem System 10 integriert sein, sodass mechanische Einwirkungen auf die Außenwand beziehungsweise Außenhaut zuverlässig detektierbar sind. Der Helligkeitssensor kann beispielsweise an einer Außenwand von dem System 10 integriert sein, sodass beispielsweise Verschmutzungen, sowohl natürlicher Art als auch in Form von zum Beispiel Graffiti, auf die Außenwand beziehungsweise Außenhaut zuverlässig detektierbar sind.

Es können zudem in nicht näher dargestellter Weise weitere Sensorelemente vorgesehen sein. Beispielsweise kann eine Kameravorrichtung und/oder eine Mikrofonvorrichtung in dem System 10 vorgesehen sein. Das Aktorelement 20 kann beispielsweise aus folgenden Komponenten ausgewählt sein: Lautsprecher, Bildschirmeinheit, Außenbeleuchtungselement, Neigungsausgleichsvorrichtung, insbesondere Neigungsausgleichsvorrichtung mit wenigstens einem Stellmotor, Warnleuchtelement. Auch können mehrere sich unterscheidende Aktorelemente 20 vorgesehen sein. Auch kann die Anzahl von sich unterscheidenden Aktorelementen 20 beliebig sein und sich beispielsweise an eine Größe der Ladesäule 28 orientieren, in welche das vorgestellte System 10 zu integrieren ist. Die Integration von Lautsprechern kann beispielsweise zur akustischen Warnmitteilung bei einer Aktivierung einer der zuvor genannten Sensorelemente 16, 18, 22, 24, 26 vorgesehen sein. Insbesondere kann somit ein Warnsignal ausgesendet werden. Dabei kann dieses Warnsignal in Form eines Tonsignals und/oder in Form einer Warnmitteilung vorgesehen sein. Auch kann dieses Warnsignal spezifisch für das jeweilige aktivierte Sensorelement 16, 18, 22, 24, 26 vorgesehen sein oder einer Kombination von aktivierten Sensorelementen 16, 18, 22, 24, 26 entsprechen beziehungsweise derart benutzerdefiniert in dem System 10 einstellbar hinterlegt sein. Die Integration einer oder mehrerer Bildschirmeinheiten und/oder einer oder mehrerer Warnleuchten und/oder eines Außenbeleuchtungselements kann beispielsweise als optisches Warnsignal oder als optische Warnmitteilung vorgesehen sein. Auch kann dieses optische Warnsignal spezifisch für das jeweilige aktivierte Sensorelement 16, 18, 22, 24, 26 vorgesehen sein oder einer Kombination von aktivierten Sensorelementen 16, 18, 22, 24, 26 entsprechen beziehungsweise derart benutzerdefiniert in dem System 10 einstellbar hinterlegt sein.

Die Neigungsausgleichsvorrichtung kann beispielsweise mit wenigstens einem Stellmotor an den unteren Ecken des Systems 10 beziehungsweise der Ladesäule 28, in welche das System 10 zu integrieren ist, vorgesehen sein, um Unebenheiten und Änderungen des Untergrunds zu detektieren und/oder ausgleichen zu können. Die Integration von Kameras kann beispielsweise vorgesehen sein, um die direkte Umgebung des Systems 10 beziehungsweise der Ladesäule 28, in welche das System 10 zu integrieren ist, zu erfassen und aufzunehmen. Die Integration von Mikrofonen kann vorgesehen sein, um diese Umgebung auch akustisch zu erfassen und aufzunehmen. Die Integration einer mehrstufigen Aktorik kann zur aktiven Anzeige und Wiedergabe von Warnsignalen und/oder Warnmeldungen bei unsachgemäßen Umgang (Diebstahl, Vandalismus) und Umwelteinflüssen vorgesehen sein. Dabei kann beispielsweise eine bedarfsgerechte Aktivierung einer Gesichts-, Objekt-, und Stimmenerkennung zur schnellen automatisierten Auswertung der Situation vorgesehen sein. Die Anzahl der sich unterscheidenden Sensorelemente 16, 18, 22, 24, 26 kann beliebig vorgesehen sein. Beispielsweise kann diese Anzahl je nach Größe der Ladesäule vorgesehen sein, in welche das vorgestellte System 10 zu integrieren ist. Dabei kann eine Verteilung dieser Anzahl von sich unterscheidenden Sensorelementen 16, 18, 22, 24, 26 derart vorgenommen werden, dass die zuvor erläuterten Vorteile jeweils optimal bereitstellbar sind.

Figur 2 zeigt ein Verfahrensablaufdiagramm 100 von einem Verfahren zur Diebstahl- und Vandalismuserkennung und -warnung für Ladesäulen 28 für Fahrzeuge. In einem ersten Verfahrensschritt 110 wird eine Steuer- und Recheneinheit 12 mit Auswerteprogramm 14 bereitgestellt. In einem zweiten Verfahrensschritt 120 wird eine Mehrzahl von sich unterscheidenden Sensorelementen 16, 18, 22, 24, 26 bereitgestellt, welche ausgelegt sind, Zustände der Ladesäule 28 zu detektieren, wobei wenigstens eine Einheit eines jeden sich unterscheidenden Sensorelements 16, 18, 22, 24, 26 vorgesehen wird und jeweilige Sensorelemente 16, 18, 22, 24, 26 jeweils mit der Steuer- und Recheneinheit 12 mit Auswerteprogramm 14 gekoppelt werden, sodass jeweilige Zustände der Sensorelemente 16, 18, 22, 24, 26 detektierbar und/oder steuerbar sind. In einem dritten Verfahrensschritt 130 wird wenigstens ein Aktorelement 20 zur Ausgabe eines Warnsignals bereitgestellt. In einem vierten Verfahrensschritt 140 wird wenigstens ein Neigungssensor 16 und wenigstens ein Bewegungssensor 18 bereitgestellt, wobei eine jeweilige mittels der Steuer- und Recheneinheit 12 mit Auswerteprogramm 14 detektierte Zustandsänderung des wenigstens einen Neigungssensors 16 und/oder des wenigstens einen Bewegungssensors 18 eine Aktivierung von wenigstens einem weiteren Sensorelement 22, 24, 26 bedingt, sodass eine Auswertung aller aktivierten Sensorelemente 16, 18, 22, 24, 26 mittels der Steuer- und Recheneinheit 12 mit Auswerteprogramm 14 durchführbar ist und in Abhängigkeit eines Auswerteergebnisses eine dafür vorgesehene in dem Auswerteprogramm 14 jeweils hinterlegte Aktionsroutine auslösbar ist.

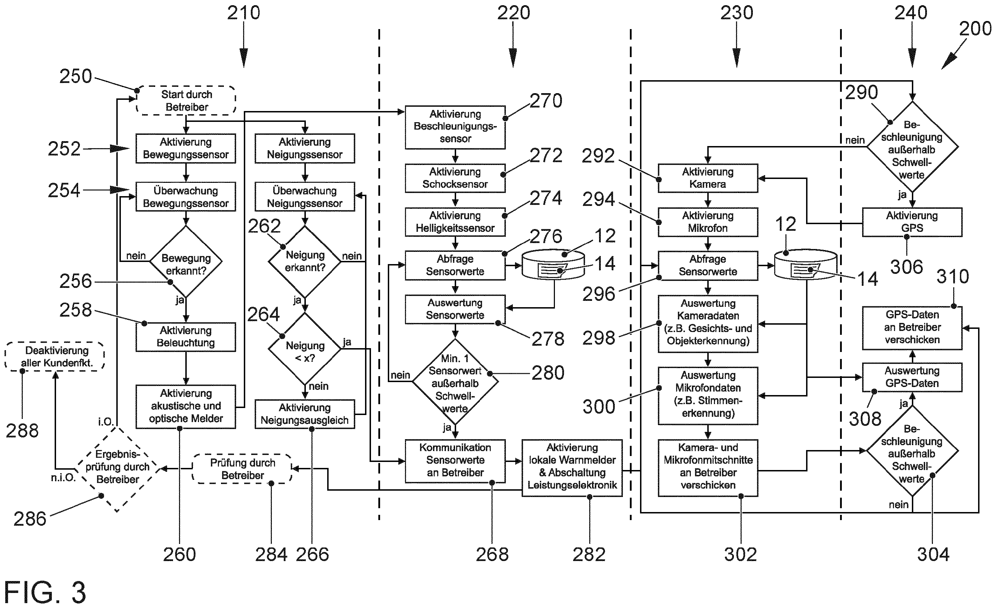

Figur 3 zeigt ein detaillierteres weiteres Verfahrensablaufdiagramm 200 von einem Verfahren zur Diebstahl- und Vandalismuserkennung und -warnung für Ladesäulen 28 für Fahrzeuge. Dabei ist dieses detailliertere weitere Verfahrensablaufdiagramm 200 in vier Stufen 210, 220, 230, 240 unterteilt dargestellt, wobei die aufeinanderfolgenden Stufen 210, 220, 230, 240 bezogen auf die Bildebene von links nach rechts dargestellt sind. In der ersten Stufe 210 findet eine Umfelderkennung statt. In der zweiten Stufe 220 findet eine Erkennung einer mechanischen Einwirkung statt. In der dritten Stufe 230 findet eine detailliertere Umfelderfassung und eine Personenidentifizierung statt. In der vierten Stufe 240 findet ein Positions-Tracking statt.

In einer ersten Verfahrenshandlung 250 findet der Start eines Systems 10 zur Diebstahl- und Vandalismuserkennung und -warnung für Ladesäulen 28 für Fahrzeuge durch einen Betreiber statt. Dieses System 10 ist dabei entsprechend funktional in der Ladesäule 28 integriert vorgesehen. In einer zweiten Verfahrenshandlung 252 werden ein Neigungssensor 16 und ein Bewegungssensor 18 aktiviert. In einer dritten Verfahrenshandlung 254 werden der Neigungssensor 16 und der Bewegungssensor 18 mittels einer Steuer- und Recheneinheit 12 mit Auswerteprogramm 14 überwacht. In einer vierten Verfahrenshandlung 256 wird abgefragt, inwiefern eine Bewegung des Systems 10 beziehungsweise der Ladesäule 28, in welcher das System 10 integriert ist, erkannt wird. Wenn nein, erfolgt eine weitere Überwachung. Wenn ja, folgt eine fünfte Verfahrenshandlung 258, in welcher eine Beleuchtung, beispielsweise ein Außenbeleuchtungselement, aktiviert wird. In einer sechsten Verfahrenshandlung 260 wird zudem ein akustischer und/oder optischer Melder aktiviert. Parallel kann zu der vierten Verfahrenshandlung 256 in einer siebten Verfahrenshandlung 262 abgefragt werden, ob bei der Überwachung des Neigungssensors 16 eine Neigung erkannt wurde. Wenn nein, erfolgt eine weitere Überwachung. Wenn ja, wird in einer achten Verfahrenshandlung 264 abgefragt, inwiefern die detektierte Neigung größer als ein vorbestimmter Wert x ist. Wenn die detektierte Neigung nicht größer als ein vorbestimmter Wert x ist, wird in einer neunten Verfahrenshandlung 266 ein Neigungsausgleich aktiviert und es folgt eine weitere Überwachung des Neigungssensors 16. Wenn die detektierte Neigung größer als ein vorbestimmter Wert x ist, wird in einer zehnten Verfahrenshandlung 268 eine Kommunikation des Sensorwertes an den Betreiber gesendet. Nach der sechsten Verfahrenshandlung 260 folgt parallel zu den Ausführungen rund um den Neigungssensor 16 Folgendes: In einer elften Verfahrenshandlung 270 wird ein Beschleunigungssensor 270 aktiviert und/oder es wird in einer zwölften Verfahrenshandlung 272 ein Schocksensor aktiviert und/oder es wird in einer dreizehnten Verfahrenshandlung 274 ein Helligkeitssensor aktiviert.

Diese zuletzt genannten Verfahrenshandlungen sind bereits in der zweiten Stufe 220 vorgesehen. In einer vierzehnten Verfahrenshandlung 276 werden die einzelnen Sensorelemente abgefragt, wobei diese Sensorwerte der Steuer- und Recheneinheit 12 mit Auswerteprogramm 14 bereitgestellt werden. In einer fünfzehnten Verfahrenshandlung 278 werden die Sensorwerte ausgewertet. Wenn mindestens ein Sensorwert außerhalb eines Schwellenwertes ist, was in einer sechzehnten 280 Verfahrenshandlung 280 abgefragt wird, folgt ebenfalls die zehnte Verfahrenshandlung 268, nämlich es wird eine Kommunikation aufgebaut und der Sensorwert an den Betreiber gesendet. Wenn dies nicht der Fall ist, wird erneut auf die vierzehnte Verfahrenshandlung 276 geschaltet. In Folge einer jeweils aktivierten zehnten Verfahrenshandlung 268 wird in einer siebzehnten Verfahrenshandlung 282 ein lokaler Warnmelder aktiviert und eine Leistungselektronik der Ladesäule 28 wird abgeschaltet. In einer achtzehnten Verfahrenshandlung 284 wird dies durch den Betreiber überprüft. In einer neunzehnten Verfahrenshandlung 286 findet die Ergebnisprüfung des Betreibers statt. Wenn diese Ergebnisprüfung ergibt, dass die übermittelten Werte nicht in Ordnung sind, findet in einer zwanzigstens Verfahrenshandlung eine Deaktivierung aller Kundenfunktionen im Zusammenhang mit dem System 10 und der Ladesäule 28, in welcher das System 10 integriert ist, statt. Wenn hingegen alles in Ordnung ist, schaltet das Verfahren entsprechend auf die erste Verfahrenshandlung 250, sodass die zuvor erläuterten Handlungen von vorne beginnen.

Ausgehend von der siebzehnten Verfahrenshandlung 282 wird parallel die dritte und vierte Stufe 230, 240 aktiviert. Dieser Vorgang ist optional, da in diesen beiden Stufen 230, 240 weitergehende Handlungen vorgesehen sind. In einer einundzwanzigsten Verfahrenshandlung 290 wird abgefragt, ob eine detektierte Beschleunigung mittels des Beschleunigungssensors außerhalb eines festgesetzten Schwellenwert liegt. Wenn nein, wird in einer zweiundzwanzigsten Verfahrenshandlung 292 eine Kameravorrichtung und/oder es wird in einer dreiundzwanzigsten Verfahrenshandlung 294 eine Mikrofonvorrichtung aktiviert. In einer vierundzwanzigsten Verfahrenshandlung 296 folgt eine Abfrage der Sensorelemente, wobei auch hier diese Sensorwerte der Steuer- und Recheneinheit 12 mit Auswerteprogramm 14 bereitgestellt werden. Der Übersichtshalber ist diese Steuer- und Recheneinheit 12 mit Auswerteprogramm 14 in dieser Figur 3 doppelt eingezeichnet dargestellt, wobei es sich jedoch jeweils um die gleiche Steuer- und Recheneinheit 12 mit Auswerteprogramm 14 handelt. In einer nicht näher dargestellten Ausführungsvariante kann es sich bei dieser Steuer- und Recheneinheit auch lediglich um einen Zwischenspeicher beziehungsweise einen Zwischenspeicher mit wenigstens einer Zusatzfunktion handeln. Allgemein können somit auch zwei jeweils voneinander getrennte Baueinheiten vorgesehen sein, welche wenigstens eine Speicherfunktion und/oder eine funktionell erweiterte Speicherkomponente umfassen. Mit anderen Worten werden hier unter anderem die Sensorwerte zwischengespeichert, um zu einem späteren Zeitpunkt ausgewertet zu werden. In einer fünfundzwanzigsten Verfahrenshandlung 298 werden die Kameradaten ausgewertet, wobei beispielsweise eine Gesichtserkennung und/oder eine Objekterkennung stattfindet. In einer sechsundzwanzigsten Verfahrenshandlung 300 findet eine Auswertung der Mikrofondaten statt, wobei beispielsweise eine Stimmenerkennung vollzogen wird. In einer siebenundzwanzigsten Verfahrenshandlung 302 werden die Kamera- und Mikrofonmitschnitte an den Betreiber verschickt, wobei gleichzeitig in einer achtundzwanzigsten Verfahrenshandlung 304 erneut abgefragt wird, ob eine detektierte Beschleunigung außerhalb eines festgesetzten Schwellenwertes liegt. Wenn nein, wird erneut mit der einundzwanzigsten Verfahrenshandlung 290 fortgefahren. In der einundzwanzigsten Verfahrenshandlung 290 wird bei Feststellung einer Beschleunigung außerhalb des festgesetzten Schwellenwertes in einer neunundzwanzigsten Verfahrenshandlung 306 eine Positionsbestimmungsvorrichtung, beispielsweise in Form eines GPS-Geräts, aktiviert, wobei auch hier gleichzeitig die zweiundzwanzigsten Verfahrenshandlung 292 ausgelöst wird. In Folge der achtundzwanzigsten Verfahrenshandlung 304 werden die GPS-Daten in einer dreißigsten Verfahrenshandlung 306 ausgewertet, wobei dies auch mittels der Steuer- und Recheneinheit 12 mit Auswerteprogramm 14 ausgelöst, stattfinden kann. Diese ausgewerteten GPS-Daten werden dann in einer einunddreißigsten Verfahrenshandlung 310 an den Betreiber verschickt.

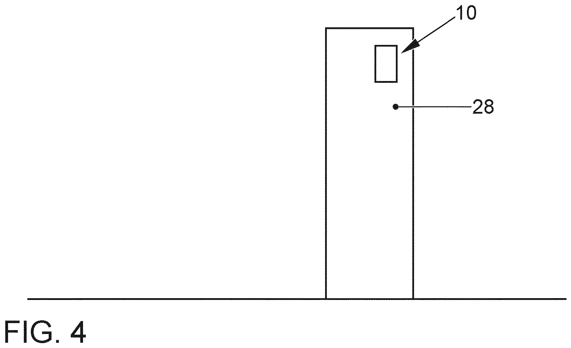

Figur 4 zeigt eine schematische Darstellung von einer Ladesäule 28 nach den Ansprüchen 1 bis 11.

### Bezugszeichenliste

- 10: System
- 12: Steuer- und Recheneinheit
- 14: Auswerteprogramm
- 16: Neigungssensor
- 18: Bewegungssensor
- 20: Aktorelement
- 22: erstes weiteres Sensorelement
- 24: zweites weiteres Sensorelement
- 26: drittes weiteres Sensorelement
- 28: Ladesäule
- 100: Verfahrensablaufdiagramm
- 110: erster Verfahrensschritt
- 120: zweiter Verfahrensschritt
- 130: dritter Verfahrensschritt
- 140: vierter Verfahrensschritt
- 200: detaillierteres weiteres Verfahrensablaufdiagramm
- 210: erste Stufe
- 220: zweite Stufe
- 230: dritte Stufe
- 240: vierte Stufe
- 250: erste Verfahrenshandlung
- 252: zweite Verfahrenshandlung
- 254: dritte Verfahrenshandlung
- 256: vierte Verfahrenshandlung
- 258: fünfte Verfahrenshandlung
- 260: sechste Verfahrenshandlung
- 262: siebte Verfahrenshandlung
- 264: achte Verfahrenshandlung
- 266: neunte Verfahrenshandlung
- 268: zehnte Verfahrenshandlung
- 270: elfte Verfahrenshandlung
- 272: zwölfte Verfahrenshandlung
- 274: dreizehnte Verfahrenshandlung
- 276: vierzehnte Verfahrenshandlung
- 278: fünfzehnte Verfahrenshandlung
- 280: sechzehnte Verfahrenshandlung
- 282: siebzehnte Verfahrenshandlung
- 284: achtzehnte Verfahrenshandlung
- 286: neunzehnte Verfahrenshandlung
- 288: zwanzigsten Verfahrenshandlung
- 290: einundzwanzigste Verfahrenshandlung
- 292: zweiundzwanzigste Verfahrenshandlung
- 294: dreiundzwanzigste Verfahrenshandlung
- 296: vierundzwanzigste Verfahrenshandlung
- 298: fünfundzwanzigste Verfahrenshandlung
- 300: sechsundzwanzigste Verfahrenshandlung
- 302: siebenundzwanzigste Verfahrenshandlung
- 304: achtundzwanzigste Verfahrenshandlung
- 306: neunundzwanzigste Verfahrenshandlung
- 308: dreißigste Verfahrenshandlung
- 310: einunddreißigste Verfahrenshandlung

## Patentansprüche

1. Ladesäule (28) zum Laden eines Fahrzeug und umfassend ein System (10) zur Diebstahl- und Vandalismuserkennung und -warnung umfassend eine Steuer- und Recheneinheit (12) mit Auswerteprogramm (14) sowie einer Mehrzahl von sich unterscheidenden Sensorelementen (16, 18, 22, 24, 26), welche ausgelegt sind, Zustände der Ladesäule (28) zu detektieren, wobei wenigstens eine Einheit eines jeden sich unterscheidenden Sensorelements (16, 18, 22, 24, 26) vorgesehen ist und jeweilige Sensorelemente (16, 18, 22, 24, 26) jeweils mit der Steuer- und Recheneinheit (12) gekoppelt sind, sodass jeweilige Zustände der Sensorelemente (16, 18, 22, 24, 26) detektierbar und/oder steuerbar sind, und wenigstens einem Aktorelement (20) zur Ausgabe eines Warnsignals,
**dadurch gekennzeichnet, dass** im aktivierten Zustand des Systems (10) wenigstens ein Neigungssensor (16) und wenigstens ein Bewegungssensor (18) aktiviert sind (S252), sodass eine jeweilige Zustandsänderung des wenigstens einen Neigungssensors (16) und/oder des wenigstens einen Bewegungssensors (18) mittels der Steuer- und Recheneinheit (12) detektierbar ist (S254),
wobei anhand einer mittels der Steuer- und Recheneinheit (12) detektierten Zustandsänderung des wenigstens einen Neigungssensors (16) und/oder des wenigstens einen Bewegungssensors (18) eine Umfelderkennung (S256, S262) erfolgt und, wenn mittels des Bewegungssensors (18) eine Bewegung erkannt wird, eine Beleuchtung der Ladesäule (28) sowie ein akustischer und/oder optischer Melder der Ladesäule (28) aktiviert werden (S258, S260) und eine Aktivierung (S270, S272, S274) von einem Beschleunigungssensor, einem Schocksensor und/oder einem Helligkeitssensor der Ladesäule (28) erfolgt,
sodass eine Auswertung (S276, S278) des aktivierten Beschleunigungssensors, Schocksensors und/oder Helligkeitssensors mittels der Steuer- und Recheneinheit (12) zur Erkennung einer mechanischen Einwirkung auf die Ladesäule (28) durchführbar ist und in Abhängigkeit eines Ergebnisses der Auswertung des aktivierten Beschleunigungssensors, Schocksensors und/oder Helligkeitssensors eine dafür vorgesehene in dem Auswerteprogramm (14) jeweils hinterlegte Aktionsroutine auslösbar ist (S280), wenn zumindest ein Sensorwert des aktivierten Beschleunigungssensors, Schocksensors und/oder Helligkeitssensors außerhalb eines vorbestimmten Schwellenwertes liegt,
wobei die Aktionsroutine eine Aktivierung (S268) einer Kommunikationseinheit und ein Übermitteln einer Information über den aktuellen Zustand der Ladesäule (28) an einen Betreiber umfasst, und
wobei die Aktionsroutine ferner eine Aktivierung (S282) des wenigstens einen Aktorelements (20) zum Ausgeben des Warnsignals und eine Ausschaltung einer Leistungselektronik der Ladesäule (28) umfasst.

2. Ladesäule (28) nach einem der vorherigen Ansprüche, wobei die wobei die Information über den aktuellen Zustand der Ladesäule (28) zumindest einen Sensorwert zumindest eines aktivierten Sensors umfasst.

3. Ladesäule (28) nach einem der vorherigen Ansprüche, wobei das wenigstens eine Aktorelement (20) ausgewählt ist aus: Lautsprecher, Bildschirmeinheit, Außenbeleuchtungselement, Neigungsausgleichsvorrichtung, insbesondere Neigungsausgleichsvorrichtung mit wenigstens einem Stellmotor, Warnleuchtelement.

4. Ladesäule (28) nach einem der vorherigen Ansprüche, wobei nach der Ausschaltung einer Leistungselektronik der Ladesäule (28) benutzerdefiniert eine Funktionsprüfung des Systems (10) auslösbar ist.

5. Ladesäule (28) nach Anspruch 4, wobei die Funktionsprüfung eine jeweilige Testroutine für die unterschiedlichen sich unterscheidenden Sensorelemente (16, 18, 22, 24, 26) umfasst.

6. Ladesäule (28) nach einem der vorherigen Ansprüche 4 bis 5, wobei die Funktionsprüfung eine jeweilige Testroutine für das wenigstens eine Aktorelement (20) umfasst.

7. Ladesäule (28) nach einem der vorherigen Ansprüche 5 bis 6, wobei jeweilige Testergebnisse der einzelnen Testroutinen zusammen mittels der Steuer- und Recheneinheit (12) mit Auswerteprogramm (14) auswertbar sind, sodass Mehrfachfehler detektierbar sind.

8. Ladesäule (28) nach einem der vorherigen Ansprüche 5 bis 7, wobei die jeweiligen Testroutinen für die unterschiedlichen sich unterscheidenden Sensorelemente (16, 18, 22, 24, 26) ausgelegt sind, jeweilige gemessene aktuelle Werte der jeweiligen unterschiedlichen sich unterscheidenden Sensorelemente (16, 18, 22, 24, 26) mit jeweiligen in der Steuer- und Recheneinheit (12) mit Auswerteprogramm (14) hinterlegten Erwartungswerte abzugleichen, sodass ein Ausmaß eines Fehlers feststellbar ist und sodass in Abhängigkeit dieses Ausmaß wenigstens eine weitere in dem Auswerteprogramm (14) jeweils hinterlegte Aktionsroutine auslösbar ist.

9. Ladesäule (28)) nach einem der vorherigen Ansprüche, wobei eine weitere Aktionsroutine eine Aktivierung einer Positionsortungsvorrichtung umfasst.

10. Ladesäule (28) nach einem der vorherigen Ansprüche, wobei die Kommunikationseinheit auf Mobilfunk und/oder einer WiFi-Technologie basiert.

11. Ladesäule (28) nach einem der vorherigen Ansprüche, wobei vor einer jeweiligen Aktivierung des Systems (10) eine benutzerdefiniert auslösbare Startroutine, welche eine jeweilige Testroutine für die unterschiedlichen sich unterscheidenden Sensorelemente (16, 18, 22, 24, 26) und/oder eine Isolationsprüfung von der Leistungselektronik der Ladesäule (28) und/oder eine Batterieprüfung umfasst, durchführbar ist.

12. Verfahren zur Diebstahl- und Vandalismuserkennung und -warnung für Ladesäulen für Fahrzeuge, umfassend die folgenden Schritte:
• Bereitstellen einer Steuer- und Recheneinheit (12) mit Auswerteprogramm (14);
• Bereitstellen einer Mehrzahl von sich unterscheidenden Sensorelementen (16, 18, 22, 24, 26), welche ausgelegt sind, Zustände der Ladesäule (28) zu detektieren, wobei wenigstens eine Einheit eines jeden sich unterscheidenden Sensorelements (16, 18, 22, 24, 26) vorgesehen wird und jeweilige Sensorelemente (16, 18, 22, 24, 26) jeweils mit der Steuer- und Recheneinheit (12) gekoppelt werden, sodass jeweilige Zustände der Sensorelemente (16, 18, 22, 24, 26) detektierbar und/oder steuerbar sind;
• Bereitstellen wenigstens eines Aktorelements (20) zur Ausgabe eines Warnsignals,
**dadurch gekennzeichnet, dass** das Verfahren zudem die folgenden weiteren Schritte umfasst:
• Aktivieren (S252) wenigstens eines Neigungssensors (16) und wenigstens eines Bewegungssensors (18), sodass eine jeweilige Zustandsänderung des wenigstens einen Neigungssensors (16) und/oder des wenigstens einen Bewegungssensors (18) mittels der Steuer- und Recheneinheit (12) detektierbar ist (S254),
• Durchführen einer Umfelderkennung (S256, S262) anhand einer detektierten Zustandsänderung des wenigstens einen Neigungssensors (16) und/oder des wenigstens einen Bewegungssensors (18) und Aktivierung (S258) einer Beleuchtung der Ladesäule (28), (S260) eines akustischen und/oder optischen Melders der Ladesäule (28) und eines (S270) Beschleunigungssensors, (S272) Schocksensors und/oder (S274) Helligkeitssensors der Ladesäule (28), wenn mittels des Bewegungssensors (18) eine Bewegung erkannt wird,
Erkennung (S276) einer mechanischen Einwirkung auf die Ladesäule (29) durch Auswertung (S278) des aktivierten Beschleunigungssensors, Schocksensors und/oder Helligkeitssensors mittels der Steuer- und Recheneinheit (12) und, in Abhängigkeit eines Ergebnisses der Auswertung des aktivierten Beschleunigungssensors, Schocksensors und/oder Helligkeitssensors , Auslösen (S280) einer dafür vorgesehenen in dem Auswerteprogramm (14) jeweils hinterlegten Aktionsroutine, wenn zumindest ein Sensorwert des aktivierten Beschleunigungssensors, Schocksensors und/oder Helligkeitssensors außerhalb eines vorbestimmten Schwellenwertes liegt,
• wobei die Aktionsroutine eine Aktivierung (S268) einer Kommunikationseinheit und ein Übermitteln einer Information über den aktuellen Zustand der Ladesäule (28) an einen Betreiber umfasst, und
• wobei die Aktionsroutine ferner eine Aktivierung (S282) des wenigstens einen Aktorelements (20) zum Ausgeben des Warnsignals und eine Ausschaltung einer Leistungselektronik der Ladesäule (28) umfasst.

13. Computerprogrammprodukt, umfassend Befehle, die bei der Ausführung des Verfahrens durch einen Computer auf eine Ladesäule nach Anspruch 1 bewirken, dass der Computer das Verfahren nach Anspruch 12 ausführt.

## Claims

1. Charging station (28) for charging a vehicle, comprising a system (10) for theft and vandalism recognition and warning comprising a control and computing unit (12) which has an evaluation program (14) and a plurality of differing sensor elements (16, 18, 22, 24, 26) which are designed to detect states of the charging station (28), at least one unit of each differing sensor element (16, 18, 22, 24, 26) being provided and respective sensor elements (16, 18, 22, 24, 26) each being coupled to the control and computing unit (12) so that respective states of the sensor elements (16, 18, 22, 24, 26) can be detected and/or controlled, and which control and computing unit has at least one actuator element (20) for outputting a warning signal,
**characterized in that** in the activated state of the system (10), at least one inclination sensor (16) and at least one motion sensor (18) are activated (S252) so that a relevant change in state of the at least one inclination sensor (16) and/or the at least one motion sensor (18) can be detected (S254) by means of the control and computing unit (12),
environment recognition (S256, S262) taking place on the basis of a change in state of the at least one inclination sensor (16) and/or the at least one motion sensor (18), which change in state is detected by means of the control and computing unit (12), and, if a motion is recognized by means of the motion sensor (18), lighting of the charging station (28) and an acoustic and/or optical alarm of the charging station (28) are activated (S258, S260) and activation (S270, S272, S274) of an acceleration sensor, a shock sensor and/or a brightness sensor of the charging station (28) takes place,
so that an evaluation (S276, S278) of the activated acceleration sensor, shock sensor and/or brightness sensor can be carried out by means of the control and computing unit (12) to recognize a mechanical effect on the charging station (28) and, depending on a result of the evaluation of the activated acceleration sensor, shock sensor and/or brightness sensor, an action routine provided for this purpose and stored in the evaluation program (14) can be triggered (S280) if at least one sensor value of the activated acceleration sensor, shock sensor and/or brightness sensor is outside a predetermined threshold value,
the action routine comprising activating (S268) a communication unit and transmitting information about the current state of the charging station (28) to an operator, and
the action routine further comprising activating (S282) the at least one actuator element (20) in order to output the warning signal and switching off power electronics of the charging station (28).

2. Charging station (28) according to any of the preceding claims, wherein the information about the current state of the charging station (28) comprises at least one sensor value from at least one activated sensor.

3. Charging station (28) according to any of the preceding claims, wherein the at least one actuator element (20) is selected from: loudspeaker, screen unit, external lighting element, inclination compensation device, in particular inclination compensation device which has at least one servomotor, warning light element.

4. Charging station (28) according to any of the preceding claims, wherein after the power electronics of the charging station (28) have been switched off, a functional test of the system (10) can be triggered in a user-defined manner.

5. Charging station (28) according to claim 4, wherein the functional test comprises a relevant test routine for the various differing sensor elements (16, 18, 22, 24, 26).

6. Charging station (28) according to any of the preceding claims 4 to 5, wherein the functional test comprises a relevant test routine for the at least one actuator element (20).

7. Charging station (28) according to any of the preceding claims 5 to 6, wherein respective test results of the individual test routines can be evaluated together by means of the control and computing unit (12) which has the evaluation program (14), so that multiple faults can be detected.

8. Charging station (28) according to any of the preceding claims 5 to 7, wherein the respective test routines for the various differing sensor elements (16, 18, 22, 24, 26) are designed to compare respective measured current values of the respective various differing sensor elements (16, 18, 22, 24, 26) with respective expected values stored in the control and computing unit (12) which has the evaluation program (14), so that an extent of a fault can be identified and so that, depending on this extent, at least one further action routine stored in the evaluation program (14) can be triggered.

9. Charging station (28) according to any of the preceding claims, wherein a further action routine comprises activating a position locating device.

10. Charging station (28) according to any of the preceding claims, wherein the communication unit is based on mobile radio and/or WiFi technology.

11. Charging station (28) according to any of the preceding claims, wherein before a relevant activation of the system (10), a start routine that can be triggered in a user-defined manner can be carried out, the start routine comprising a relevant test routine for the various differing sensor elements (16, 18, 22, 24, 26) and/or an insulation test of the power electronics of the charging station (28) and/or a battery test.

12. Method for theft and vandalism recognition and warning for charging stations for vehicles, comprising the following steps:
• providing a control and computing unit (12) which has an evaluation program (14);
• providing a plurality of differing sensor elements (16, 18, 22, 24, 26) which are designed to detect states of the charging station (28), at least one unit of each differing sensor element (16, 18, 22, 24, 26) being provided, and respective sensor elements (16, 18, 22, 24, 26) each being coupled to the control and computing unit (12) so that respective states of the sensor elements (16, 18, 22, 24, 26) can be detected and/or controlled;
• providing at least one actuator element (20) for outputting a warning signal,
**characterized in that** the method also comprises the following additional steps:
• activating (S252) at least one inclination sensor (16) and at least one motion sensor (18) so that a relevant change in state of the at least one inclination sensor (16) and/or the at least one motion sensor (18) can be detected (S254) by means of the control and computing unit (12),
• carrying out environment recognition (S256, S262) on the basis of a detected change in state of the at least one inclination sensor (16) and/or the at least one motion sensor (18), and activating (S258) lighting of the charging station (28), (S260) of an acoustic and/or optical alarm of the charging station (28) and of an (S270) acceleration sensor, (S272) shock sensor and/or (S274) brightness sensor of the charging station (28) when motion is recognized by means of the motion sensor (18),
recognizing (S276) a mechanical effect on the charging station (29) by evaluating (S278) the activated acceleration sensor, shock sensor and/or brightness sensor by means of the control and computing unit (12) and, depending on a result of the evaluation of the activated acceleration sensor, shock sensor and/or brightness sensor, triggering (S280) an action routine provided for this purpose and stored in the evaluation program (14) if at least one sensor value of the activated acceleration sensor, shock sensor and/or brightness sensor is outside a predetermined threshold value,
• the action routine comprising activating (S268) a communication unit and transmitting information about the current state of the charging station (28) to an operator, and
• the action routine further comprising activating (S282) the at least one actuator element (20) in order to output the warning signal and switching off power electronics of the charging station (28).

13. Computer program product comprising instructions which, when the method is executed by a computer on a charging station according to claim 1, cause the computer to execute the method according to claim 12.

## Revendications

1. Colonne de charge (28) pour la charge d'un véhicule et comprenant un système (10) pour la reconnaissance et l'avertissement de vol et de vandalisme comprenant une unité de commande et de calcul (12) comportant un programme d'évaluation (14) ainsi qu'une pluralité d'éléments capteurs (16, 18, 22, 24, 26) distincts qui sont conçus pour détecter des états de la colonne de charge (28), dans laquelle au moins une unité de chaque élément capteur (16, 18, 22, 24, 26) distinct est prévue et des éléments capteurs (16, 18, 22, 24, 26) respectifs sont couplés respectivement à l'unité de commande et de calcul (12), de sorte que des états respectifs des éléments capteurs (16, 18, 22, 24, 26) peuvent être détectés et/ou commandés, et au moins un élément actionneur (20) pour l'émission d'un signal d'avertissement,
**caractérisée en ce que,** dans l'état activé du système (10), au moins un capteur d'inclinaison (16) et au moins un capteur de mouvement (18) sont activés (S252), de sorte qu'un changement d'état respectif de l'au moins un capteur d'inclinaison (16) et/ou de l'au moins un capteur de mouvement (18) peut être détecté (S254) à l'aide de l'unité de commande et de calcul (12),
dans laquelle une reconnaissance de l'environnement (S256, S262) est effectuée à l'aide d'un changement d'état, détecté à l'aide de l'unité de commande et de calcul (12), de l'au moins un capteur d'inclinaison (16) et/ou de l'au moins un capteur de mouvement (18) et, lorsqu'un mouvement est reconnu à l'aide du capteur de mouvement (18), un éclairage de la colonne de charge (28) ainsi qu'un avertisseur acoustique et/ou optique de la colonne de charge (28) sont activés (S258, S260) et une activation (S270, S272, S274) d'un capteur d'accélération, d'un capteur de choc et/ou d'un capteur de luminosité de la colonne de charge (28) est effectuée,
de sorte qu'une évaluation (S276, S278) du capteur d'accélération, du capteur de choc et/ou du capteur de luminosité activés peut être réalisée à l'aide de l'unité de commande et de calcul (12) pour la reconnaissance d'une action mécanique sur la colonne de charge (28) et, en fonction d'un résultat de l'évaluation du capteur d'accélération, capteur de choc et/ou capteur de luminosité activés, une routine d'action prévue à cet effet et enregistrée dans le programme d'évaluation (14) peut être déclenchée (S280) lorsqu'au moins une valeur de capteur du capteur d'accélération, du capteur de choc et/ou du capteur de luminosité activés se situe en dehors d'une valeur seuil prédéterminée,
dans laquelle la routine d'action comprend une activation (S268) d'une unité de communication et une transmission d'une information concernant l'état actuel de la colonne de charge (28) à un opérateur, et
dans laquelle la routine d'action comprend en outre une activation (S282) de l'au moins un élément actionneur (20) pour l'émission du signal d'avertissement et une mise hors tension d'une électronique de puissance de la colonne de charge (28).

2. Colonne de charge (28) selon l'une des revendications précédentes, dans laquelle l'information concernant l'état actuel de la colonne de charge (28) comprend au moins une valeur de capteur d'au moins un capteur activé.

3. Colonne de charge (28) selon l'une des revendications précédentes, dans laquelle l'au moins un élément actionneur (20) est choisi parmi : haut-parleur, unité d'écran, élément d'éclairage extérieur, dispositif de compensation de l'inclinaison, en particulier dispositif de compensation de l'inclinaison comportant au moins un servomoteur, élément lumineux d'avertissement.

4. Colonne de charge (28) selon l'une des revendications précédentes, dans laquelle, après la mise hors tension d'une électronique de puissance de la colonne de charge (28), un contrôle de fonctionnement du système (10) peut être déclenché de manière définie par l'utilisateur.

5. Colonne de charge (28) selon la revendication 4, dans laquelle le contrôle de fonctionnement comprend une routine de test respective pour les différents éléments capteurs (16, 18, 22, 24, 26) distincts.

6. Colonne de charge (28) selon l'une des revendications précédentes 4 à 5, dans laquelle le contrôle de fonctionnement comprend une routine de test respective pour l'au moins un élément actionneur (20).

7. Colonne de charge (28) selon l'une des revendications précédentes 5 à 6, dans laquelle des résultats de test respectifs des routines de test individuelles peuvent être évalués ensemble à l'aide de l'unité de commande et de calcul (12) comportant un programme d'évaluation (14), de sorte que des erreurs multiples peuvent être détectées.

8. Colonne de charge (28) selon l'une des revendications précédentes 5 à 7, dans laquelle les routines de test respectives pour les différents éléments capteurs (16, 18, 22, 24, 26) sont conçues pour permettre aux valeurs actuelles mesurées respectives des différents éléments capteurs (16, 18, 22, 24, 26) distincts respectifs d'être comparées avec des valeurs attendues respectives enregistrées dans l'unité de commande et de calcul (12) comportant un programme d'évaluation (14), de sorte qu'une ampleur d'une erreur peut être constatée et de sorte qu'en fonction de cette ampleur, au moins une autre routine d'action enregistrée dans le programme d'évaluation (14) peut être déclenchée.

9. Colonne de charge (28)) selon l'une des revendications précédentes, dans laquelle une autre routine d'action comprend une activation d'un dispositif de localisation de position.

10. Colonne de charge (28) selon l'une des revendications précédentes, dans laquelle l'unité de communication est basée sur la téléphonie mobile et/ou une technologie WiFi.

11. Colonne de charge (28) selon l'une des revendications précédentes, dans laquelle, avant une activation respective du système (10), une routine de démarrage pouvant être déclenchée de manière définie par l'utilisateur, qui comprend une routine de test respective pour les différents éléments capteurs (16, 18, 22, 24, 26) distincts et/ou un contrôle d'isolation de l'électronique de puissance de la colonne de charge (28) et/ou un contrôle de la batterie, peut être réalisée.

12. Procédé pour la reconnaissance et l'avertissement de vol et de vandalisme pour des colonnes de charge pour véhicules, comprenant les étapes suivantes :
• mise à disposition d'une unité de commande et de calcul (12) comportant un programme d'évaluation (14) ;
• mise à disposition d'une pluralité d'éléments capteurs (16, 18, 22, 24, 26) distincts qui sont conçus pour détecter des états de la colonne de charge (28), dans lequel au moins une unité de chaque élément capteur (16, 18, 22, 24, 26) distinct est prévue et des éléments capteurs (16, 18, 22, 24, 26) respectifs sont couplés respectivement à l'unité de commande et de calcul (12), de sorte que des états respectifs des éléments capteurs (16, 18, 22, 24, 26) peuvent être détectés et/ou commandés ;
• mise à disposition d'au moins un élément actionneur (20) pour l'émission d'un signal d'avertissement, **caractérisé en ce que** le procédé comprend en outre les étapes supplémentaires suivantes :
• activation (S252) d'au moins un capteur d'inclinaison (16) et d'au moins un capteur de mouvement (18), de sorte qu'un changement d'état respectif de l'au moins un capteur d'inclinaison (16) et/ou de l'au moins un capteur de mouvement (18) peut être détecté (S254) à l'aide de l'unité de commande et de calcul (12),
• réalisation d'une reconnaissance de l'environnement (S256, S262) à l'aide d'un changement d'état détecté de l'au moins un capteur d'inclinaison (16) et/ou de l'au moins un capteur de mouvement (18) et activation (S258) d'un éclairage de la colonne de charge (28), (S260) d'un avertisseur acoustique et/ou optique de la colonne de charge (28) et d'un (S270) capteur d'accélération, (S272) capteur de choc et/ou (S274) capteur de luminosité de la colonne de charge (28), lorsqu'un mouvement est reconnu à l'aide du capteur de mouvement (18),
reconnaissance (S276) d'une action mécanique sur la colonne de charge (29) par évaluation (S278) du capteur d'accélération, du capteur de choc et/ou du capteur de luminosité activés à l'aide de l'unité de commande et de calcul (12) et, en fonction d'un résultat de l'évaluation du capteur d'accélération, capteur de choc et/ou capteur de luminosité activés, déclenchement (S280) d'une routine d'action prévue à cet effet et respectivement enregistrée dans le programme d'évaluation (14), lorsqu'au moins une valeur de capteur du capteur d'accélération, du capteur de choc et/ou du capteur de luminosité activés se situe en dehors d'une valeur seuil prédéterminée,
• dans lequel la routine d'action comprend une activation (S268) d'une unité de communication et une transmission d'une information concernant l'état actuel de la colonne de charge (28) à un opérateur, et
• dans lequel la routine d'action comprenant en outre une activation (S282) de l'au moins un élément actionneur (20) pour l'émission du signal d'avertissement et une mise hors tension d'une électronique de puissance de la colonne de charge (28).

13. Produit programme d'ordinateur comprenant des instructions qui, lorsque le procédé est exécuté par un ordinateur sur une colonne de charge selon la revendication 1, amènent l'ordinateur à exécuter le procédé selon la revendication 12.
